# EUROPEAN PATENT APPLICATION

(11) **EP 2 711 827 A2**
(43) Date of publication of application: **26.03.2014**
(21) Application number: 13185123.0
(22) Date of filing: 19.09.2013
(51) Int. Cl.: G06F 3/0488

(54) **Touch-sensitive device and method for adjusting zoom level**

(30) Priority: 21.09.2012 KR 20120105414
(71) Applicant: Samsung Electronics Co., Ltd, Gyeonggi-do 443-742 (KR)
(72) Inventor: Choi, Jinho, 443-742 Gyeonggi-do (KR)
(74) Representative: Gover, Richard Paul

(57) **Abstract**

A touch-sensitive device including a touch screen performs a method for adjusting a zoom level of a screen without a repeated zoom-in/out input. A display panel displays a first screen at a first zoom level, and a touch panel detects a zoom-in or a zoom-out from at least one point thereof. A control unit determines whether the detected zoom-in or zoom-out input is held for a predefined first time, and then controls to display a second screen at a second zoom level when the detected zoom-in or zoom-out input is held for the predefined first time.

## Description

### BACKGROUND OF THE INVENTION

### 1. Field of the Invention

The present invention relates generally to input technology of a touch-sensitive device, and more particularly, to a touch-sensitive device and method for adjusting a zoom level of a screen displayed on the device.

### 2. Description of the Related Art

As touch-sensitive devices having a touch screen have increased in popularity, full touch screen- type input technology has been widely applied to such devices. A touch-sensitive device performs a specific function in response to a touch input from a user's finger. Particularly, using touch input technology a user can zoom-in or zoom-out the size of a screen displayed on a display panel of the touch screen. A double tap input technique or a pinch-in/out input technique is commonly used for this adjustment.

A double tap refers to tapping twice any point on a touch panel of the touch screen. In response to a double tap input, some devices enlarge or reduce the size of a screen at a given rate. A pinch-in/out refers to simultaneously touching two points on the touch panel and then narrowing or widening a distance between the touched points. In response to a pinch-in/out input, some devices enlarge or reduce the size of a screen at a given rate. A double tap or pinch-in/out input results in a zoom-in or zoom-out process for a screen being currently displayed on the display panel.

A pinch-in/out adjusts a screen size depending on a distance between two touch points. To enlarge or reduce a screen to a desired size, a pinch-in/out action is repeatedly required.

If a user inputs a double tap during a pinch-in/out action to avoid a repeated pinch-in/out, the display panel outputs the minimum-sized screen. Specifically, when a user who desires to further enlarge the size of a screen during a pinch-out action inputs a double tap, a screen displayed on the display panel becomes reduced rather than enlarged. Also, if a user who desires to reduce the size of a screen during a pinch-in action inputs a double tap, a screen displayed on the display panel becomes reduced, which is an inconvenience to the user.

### SUMMARY OF THE INVENTION

Accordingly, the present invention is designed to address the above-mentioned problems and/or disadvantages and to offer at least the advantages described below.

An aspect of the present invention is to provide a touch-sensitive device and method for adjusting a zoom level of a screen without a repeated zoom-in/out input by allowing a display panel of the device to continuously detect a zoom-in/out input for a period of time.

According to an aspect of the present invention, a method is provided for adjusting a zoom level in a touch-sensitive device having a touch screen. The method includes displaying a first screen having a first zoom level, detecting a zoom-in input or a zoom-out input from at least one point of the touch screen, determining whether the detected zoom-in or zoom-out input is held for a predefined first time, and displaying a second screen having a second zoom level when the detected zoom-in or zoom-out input is held for the predefined first time.

According to another aspect of the present invention, a touch-sensitive device having a touch screen utilizing a zoom level adjustment is provided. The device includes a display panel configured to display a first screen having a first zoom level, a touch panel configured to detect a zoom-in input or a zoom-out input from at least one point thereof, and a control unit configured to determine whether the detected zoom-in or zoom-out input is held for a predefined first time, and to control the display panel to display a second screen having a second zoom level when the detected zoom-in or zoom-out input is held for the predefined first time.

### BRIEF DESCRIPTION OF THE DRAWINGS

The objects, features and advantages of the present invention will be more apparent from the following detailed description in conjunction with the accompanying drawings, in which:
FIG. 1 illustrates a touch-sensitive device in accordance with an embodiment of the present invention;
FIG. 2 illustrates an input technique to reduce a screen displayed on a display panel of a touch-sensitive device in accordance with an embodiment of the present invention;
FIG. 3 illustrates an input technique to enlarge a screen displayed on a display panel of a touch-sensitive device in accordance with an embodiment of the present invention;
FIG. 4 illustrates an input method for adjusting a zoom level of a screen displayed on a display panel of a touch-sensitive device in accordance with an embodiment of the present invention;
FIG. 5 illustrates screenshots of an example of adjusting a zoom level of a screen displayed on a display panel of a touch-sensitive device in accordance with an embodiment of the present invention; and
FIG. 6 illustrates screenshots of a zoom toolbar for adjusting a zoom level of a screen displayed on a display panel of a touch-sensitive device in accordance with another embodiment of the present invention.

### DETAILED DESCRIPTION OF EMBODIMENTS OF THE INVENTION

Embodiments of the present invention will now be described more fully with reference to the accompanying drawings. The same reference numerals are used throughout the drawings to refer to the same or like parts. Detailed descriptions of well-known functions and structures incorporated herein may be omitted to avoid obscuring the subject matter of the present invention.

In this disclosure, 'zoom level' refers to relative rank on the size of a screen outputted by a display panel of a touch-sensitive device. For example, if the display panel displays a screen having a certain size, i.e., a certain zoom level screen, and if a zoom-out input is received, a screen displayed after a zoom-out input has a lower zoom level than before such an input. In contrast, a screen displayed after a zoom-in input has a higher zoom level than before such an input. Zoom-in/out rates between respective zoom levels are determined by a manufacturer or a user.

Herein, a first zoom level screen refers to a certain-sized zoom level screen outputted by the display panel. In other words, the first zoom level screen indicates a screen being currently displayed on the display panel when a touch panel does not receive a zoom-in/out input. However, this does not mean that the first zoom level screen has never received a zoom-in/out input. A default-sized screen offered by a service provider or a device corresponds to the first zoom level screen, but is not the only first zoom level screen.

According to embodiments of this invention, after a touch panel receives a zoom-in or zoom-out input from a user, a control unit of the device continuously detects the zoom-in or zoom-out input for at least a given time. If this input is continuously detected, the control unit controls a display panel to display a screen having a specific zoom level. In such a change of zoom levels through the above process, the first zoom level is before a change of zoom levels. Therefore, even though a zoom level of a screen offered as a default value has been already changed, any zoom level value of a screen just before the above process is the first zoom level value. If a zoom level offered as a default value is "level 1", and if a zoom level of a screen displayed on a display panel becomes "level 2" for some reason, without passing through the above process of changing a zoom level, a zoom level of "level 2" is the first zoom level.

A method for adjusting a zoom level of a screen in accordance with this invention is applicable to various types of touch-sensitive devices having a touch screen, such as mobile devices including a cellular phone, a smart phone, a tablet Personal Computer (PC), a handheld PC, a Portable Media Player (PMP), a Personal Digital Assistant (PDA), and a digital camera.

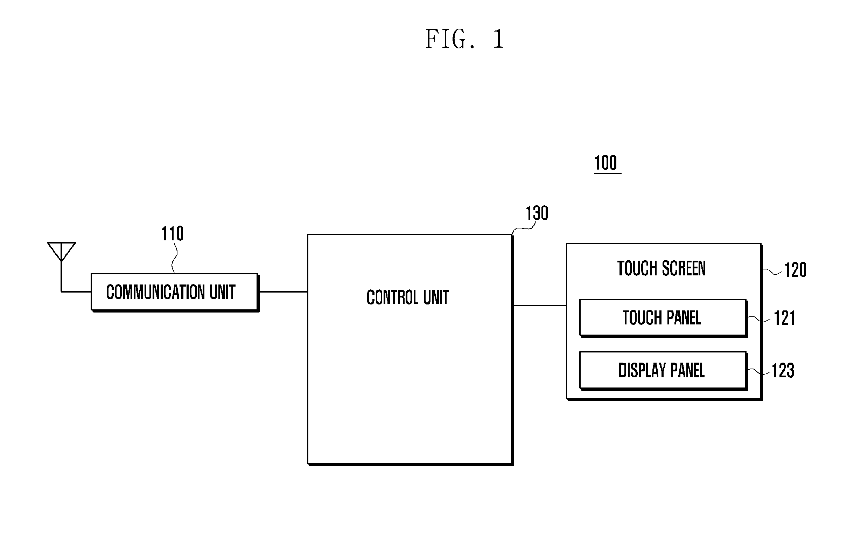

FIG. 1 illustrates a touch-sensitive device in accordance with an embodiment of the present invention.

Referring to FIG. 1, the device 100 includes a communication unit 110, a touch screen 120, and a control unit 130.

The communication unit 110 supports a communication function of the device 100. The communication unit 110 could be omitted from the device 100 if the device 100 does not support a communication function. The communication unit 110 is activated at user's request, and is controlled by various key maps including a control key map that may be displayed on a display panel 123.

In some embodiments, the communication unit 110 is offered in the form of a mobile communication module to support a mobile communication function of the device 100. This type of communication unit 110 establishes a communication channel with a mobile communication system and supports transmission/reception of signals for execution of a mobile communication function of the device 100. For example, the communication unit 110 may form at least one of a voice service channel, a video service channel and a data service channel with a mobile communication system and support transmission/reception of specific signals associated with the respective service channels.

The touch screen 120 offers various screen interfaces required for operation of the device 100. The touch screen 120 includes a touch panel 121 and the display panel 123. The touch panel 121 has a size equal to or greater than the size of the display panel 123, thus operating as a full touch screen.

Through the display panel 123, the touch screen 120 may selectively display an idle screen, a menu screen, various application execution screens, images, and videos required for the operation of the device 100 or for a user's manipulations.

The touch panel 121 is disposed on the display panel 123, creates a touch event in response to user's touch gesture thereon, and transmits the touch event to the control unit 130 which detects user's touch gesture from the received touch event, and controls the above-listed elements in response to the detected touch gesture. The touch panel 121 is, for example, a resistive type, a capacitive type, an electromagnetic induction type, or a pressure type.

The control unit 130 controls the entire operations of the device 100, controls signal flows between elements of the device 100, and processes data. The control unit 130 controls power supply from a battery to respective internal elements. Additionally, to perform a method for adjusting a zoom level, the control unit 130 detects various touch gesture inputs received from the touch panel 121. The control unit 130 identifies the type of a touch gesture input and determines whether the touch gesture input is a zoom-in or a zoom-out command. The control unit 130 determines whether the above touch gesture input corresponding to a zoom-in or a zoom-out commend continues for a period of time. If so, the control unit 130 changes a zoom level to a predefined level, as will be described in detail later herein.

Based on digital convergence tendencies, the touch-sensitive device 100 may further include any other known elements such as a sensor module for detecting information related to location variations of the device 100, a Global Positioning System (GPS) module for measuring the location of the device 100, and a camera module.

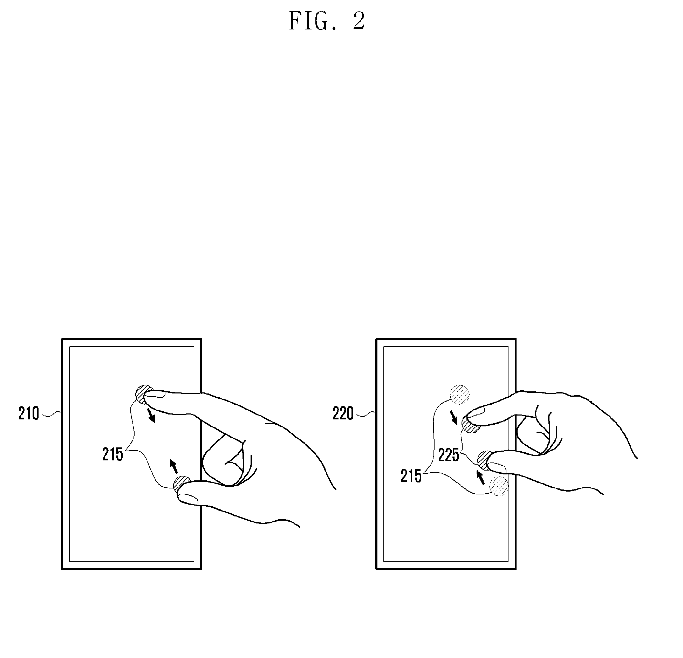

FIG. 2 illustrates an input technique to reduce a screen displayed on the display panel 123 of the touch-sensitive device 100 in accordance with an embodiment of the present invention.

Referring to FIG. 2, the left view 210 and the right view 220 show that the device 100 receives a pinch-in input through the touch screen 120.

As shown in the left view 210 of FIG. 2, the touch panel 121 receives an initial touch input 215 at two points thereof. Then the control unit 130 receives a signal of the two-point touch input 215 from the touch panel 121. If a distance between two points of the touch input 215 is decreased, the control unit 130 regards this as a pinch-in input.

As shown in the right view 220 of FIG. 2, the initial two-point touch input 215 is changed to the final two-point touch input 225 with a decreased distance. While two touch points are approaching each other, a touch state with fingers is maintained on the touch panel 121.

In such a pinch-in input, a screen is reduced in proportion to variations of a distance between two touch points. A zoom-out occurs in a screen displayed on the display panel 123. The extent of such a zoom-out, i.e., a decreasing degree of a zoom level, is set by a user or a manufacturer. Normally, a zoom level decreases according to variations of a distance between two touch points.

If a state of the final touch input 225 with a decreased distance is maintained without any further distance variations for a period of time, the control unit 130 recognizes this state as a new command. Namely, if the final two-point touch input 225 is held for a given first time, the control unit 130 regards this as an input for invoking a predefined zoom level screen. Therefore, after a pinch-in input is held for a period of time as shown in the right view 220, the control unit 130 controls the display panel 123 to display a screen with a predefined decreasing zoom level.

For example, when the final touch input 225 continues for n seconds, a current zoom level may decrease to a predefined decreasing zoom level that corresponds to a level resulting from a pinch-in performed twice. Alternatively, this predefined decreasing zoom level may correspond to the minimum zoom level displayable by the display panel 123.

In another embodiment, a period of time is divided into two or more sections. In the above example, n seconds is the sum of n1, n2, etc. Time sections n1 and n2 are measured from a time point at the completion of the initial zoom-in or zoom-out input to a time point at the release of a two-point touch. In this case, n2 seconds is longer than n1 seconds. If a zoom level decreases at a certain rate in response to n1-second input, a zoom level may further decrease at the same rate in response to the n2-second input. Alternatively, a zoom level may increase to the minimum level in response to the n2-second input.

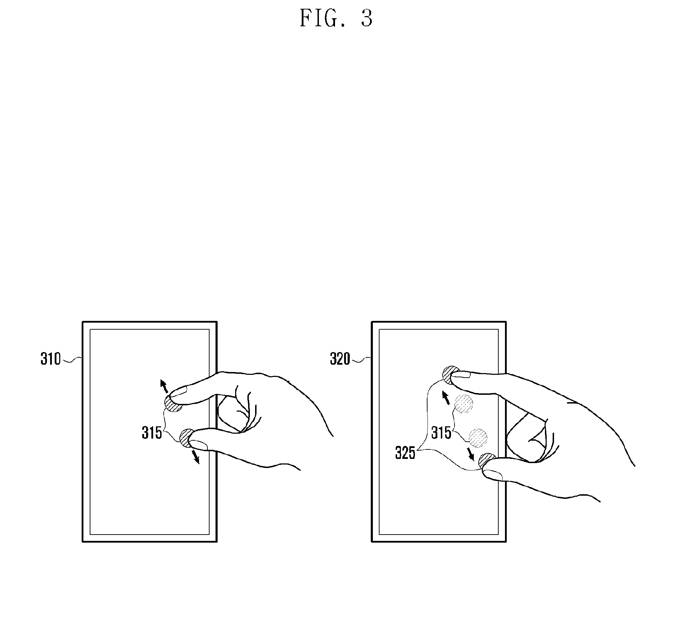

FIG. 3 illustrates an input technique to enlarge a screen displayed on the display panel of the touch-sensitive device in accordance with an embodiment of the present invention.

Referring to FIG. 3, the left view 310 and the right view 320 show that the device 100 receives a pinch-out input through the touch screen 120.

As shown in the left view 310 of FIG. 3, the touch panel 121 receives an initial touch input 315 at two points thereof. Then the control unit 130 receives a signal of the two-point touch input 315 from the touch panel 121. If a distance between two points of the touch input 315 is increased, the control unit 130 regards this as a pinch-out input.

As shown in the right view 320 of FIG. 3, the initial two-point touch input 315 is changed to the final two-point touch input 325 with an increased distance. While two touch points expand from each other, a touch state with fingers is maintained on the touch panel 121.

In such a pinch-out input, a screen is enlarged in proportion to variations of a distance between two touch points. A zoom-in occurs in a screen displayed on the display panel 123. The extent of such a zoom-in, i.e., an increased degree of zoom level, is a period of by a user or a manufacturer. Normally, a zoom level rises according to variations of a distance between two touch points.

If a state of the final touch input 325 with an increased distance is maintained without any further distance variations for a period of time, the control unit 130 recognizes this state as a new command. Specifically, if the final two-point touch input 325 is held for a given first time, the control unit 130 regards this as an input for invoking a predefined zoom level screen. Therefore, after a pinch-out input is held for a period of time as shown in the right view 320, the control unit 130 controls the display panel 123 to display a screen with a predefined increased zoom level. For example, when the final touch input 325 continues for n seconds, a current zoom level may rise to a predefined increased zoom level that corresponds to a level resulting from a pinch-out performed twice. Alternatively, this predefined increased zoom level may correspond to the maximum zoom level displayable by the display panel 123.

In another embodiment, a period of time is divided into two or more sections. In the above example, n seconds is the sum of n1, n2, etc. Time sections n1 and n2 are measured from a time point at the completion of the initial zoom-in or zoom-out input to a time point at the release of a two-point touch. In this case, n2 seconds is longer than n1 seconds. If a zoom level increass at a certain rate in response to the n1-second input, a zoom level may further increase at the same rate in response to the n2-second input. Alternatively, a zoom level may increase to the maximum level in response to the n2-second input.

If an input time is divided into sections such as n1 seconds and n2 seconds as discussed above in FIGs. 2 and 3, such different input times are defined as the first time and the second time, which are measured from a time point at the completion of the initial zoom-in or zoom-out input to a time point at the release of a two-point touch. The zoom level of a current screen is regarded as the first zoom level. The zoom levels of screens to be displayed on the display panel 123 in response to inputs of the first and second times are defined as the second zoom level and the third zoom level, respectively.

Although a pinch-in/out input is discussed herein as a touch input technique, this is only an example and is not to be considered as a limitation of the present invention.

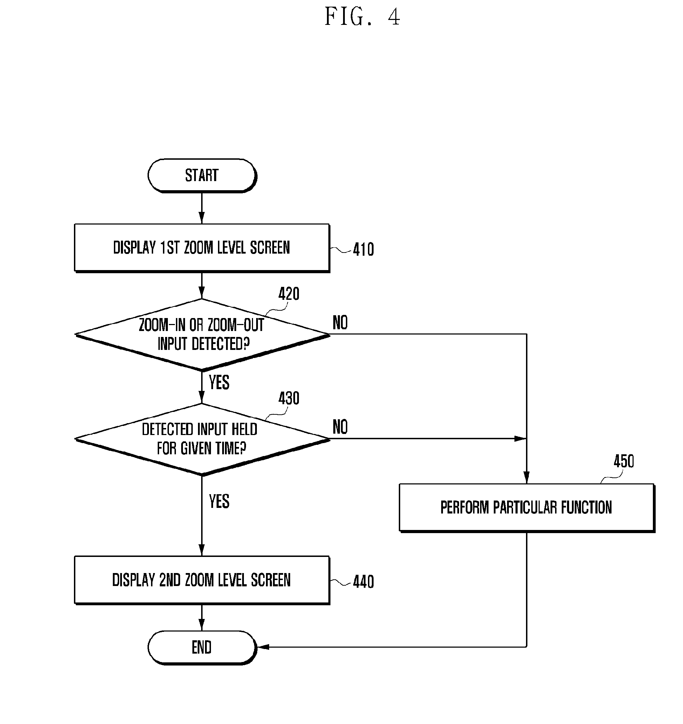

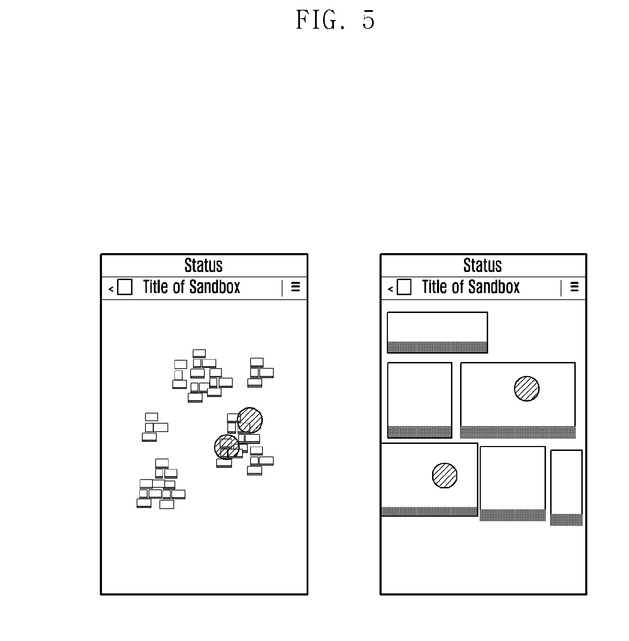

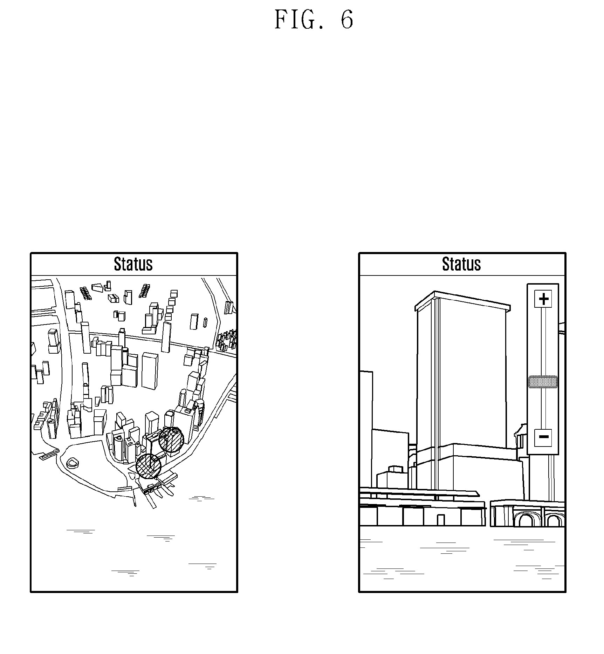

FIG. 4 illustrates an input method for adjusting a zoom level of a screen displayed on a display panel of a touch-sensitive device in accordance with an embodiment of the present invention. FIG. 5 illustrates screenshots of an example of adjusting a zoom level of a screen displayed on a display panel of a touch-sensitive device in accordance with an embodiment of the present invention, and FIG. 6 illustrates screenshots of a zoom toolbar for adjusting a zoom level of a screen displayed on a display panel of a touch-sensitive device in accordance with another embodiment of the present invention.

Referring to FIG. 4, at step 410, the control unit 130 controls the display panel 123 to display the first zoom level screen. As discussed above, the first zoom level screen does not refer to a screen having a default zoom level, but indicates a current screen being displayed on the display panel 123 before a method of the present invention is performed. Referring to FIG. 5, either the left or right screenshot becomes the first zoom level screen.

At step 420, the control unit 130 receives a touch input through the touch panel 121 and then determines whether one of a zoom-in input and a zoom-out input is received from the received touch input. For example, the control unit 130 determines whether the received touch input is a pinch-in input or a pinch-out input. If a pinch-in input is received, the control unit 130 determines this as a zoom-out input. Similarly, if a pinch-out input is received, the control unit 130 determines this as a zoom-in input.

At step 430, the control unit 130 determines whether the detected zoom-in or zoom-out input continues for a predefined time. For example, when a pinch-in input is completed, after two points of a touch input are decreased, the control unit 130 determines whether the two-point touch input is held for a predefined time without being removed from the touch panel 121. This predefined time is determined in advance by a manufacturer at the manufacture or by a user setting.

In another embodiment, a predefined time is divided into two or more sections. For example, the first time is defined as initial n seconds for which a touch input continues, and the second time is defined as subsequent n seconds or m seconds for which the touch input continues.

At step 440, the control unit 130 controls the display panel 123 to display the second zoom level screen. In comparison with the first zoom level screen, the second zoom level screen has a predefined higher or lower level. In other words, the second zoom level screen is enlarged or reduced at a given rate from the first zoom level screen. In some cases, the second zoom level screen is the maximum or minimum screen level among all displayable screens.

Referring to FIG. 5, if the left screenshot indicates the first zoom level screen, and if the control unit 130 detects a zoom-in input and further detects a maintaining of a touch input for n seconds from a time point at the completion of the detected zoom-in input, the right screenshot in FIG. 5 may correspond to the second zoom level screen.

In contrast, if the right screenshot indicates the first zoom level screen, and if the control unit 130 detects a zoom-out input and further detects a maintaining of a touch input for n seconds from a time point at the completion of the detected zoom-out input, the left screenshot in FIG. 5 may correspond to the second zoom level screen.

Accordingly, the second zoom level does not always indicate a higher zoom level than the first zoom level.

According to another embodiment, at step 430 a predefined time is divided into the first time and the second time. At step 440, the control unit 130 controls the display panel 123 to selectively display the second zoom level screen and the third zoom level screen, depending on time sections.

For example, when a zoom-in input is held for the predefined first time, the control unit 130 controls the display panel 123 to display the second zoom level screen. If the zoom-in input is held for the predefined second time greater than the first time, the control unit 130 controls the display panel 123 to display the third zoom level screen which has a higher zoom level than that of the second zoom level screen.

In this example, the display panel 123 may display an enlarged screen by increasing a zoom level at a given rate. Alternatively, the display panel 123 may initially display an enlarged screen at a given rate and then display the maximum-sized screen for the second time.

In another example, when a zoom-out input is held for the predefined first time, the control unit 130 controls the display panel 123 to display the second zoom level screen. If the zoom-out input is held for the predefined second time greater than the first time, the control unit 130 controls the display panel 123 to display the third zoom level screen which has a lower zoom level than that of the second zoom level screen.

In this example, the display panel 123 may display a reduced screen by decreasing a zoom level at a given rate. Alternatively, the display panel 123 may initially display a reduced screen at a given rate and then display the minimum-sized screen for the second time.

When a zoom-in input and a zoom-out input are a pinch-out input and a pinch-in input, respectively, the second zoom level screen resulting from a zoom-in input has a higher zoom level than that of an enlarged screen resulting from a pinch-out performed once. The second zoom level screen resulting from a zoom-out input has a lower zoom level than that of a reduced screen resulting from a pinch-in performed once.

Returning to FIG. 4, if a zoom-in or zoom-out input is not detected at step 420, the control unit 130 performs any other particular function at step 450. This function is irrelevant to enlargement or reduction of screen. Additionally, if the detected zoom-in or zoom-out input fails to continue for a predefined time at step 430, the control unit 130 performs any particular function at step 450. In this case, the control unit 130 detects only a one-time zoom-in or zoom-out gesture and then controls the display panel 123 to display a corresponding screen.

Step 440 may further include step of displaying a zoom toolbar for adjusting a zoom level as shown in FIG. 6. As discussed above, the display panel 123 displays the second zoom level screen. However, if a user attempts to change a zoom level through the above-discussed method when the user attempts to invoke another zoom level similar to the second zoom level of a screen enlarged or reduced at a given rate, a precise adjustment of a zoom level is difficult. Since this may inconveniently require a repeated pinch-in/out input, the control unit 130 controls the display panel 123 to display a zoom toolbar on a separate layer or at a certain part of a screen in order to avoid such inconvenience. In this case, the touch panel 121 receives from the zoom toolbar any user's input for precisely adjusting a zoom level, so that the control unit 130 controls the display panel 123 to display a screen with a precisely adjusted zoom level.

While this invention has been particularly shown and described with reference to embodiments thereof, it will be understood by those skilled in the art that various changes in form and details are possible herein without departing from the spirit and scope of the invention as defined by the appended claims.

## Claims

1. A method for adjusting a zoom level in a touch-sensitive device including a touch screen, the method comprising steps of:
displaying a first screen at a first zoom level;
detecting a zoom-in input or a zoom-out input at at least one point of the touch screen;
determining whether the detected zoom-in or zoom-out input is held for a predefined first time; and
displaying a second screen at a second zoom level, when the detected zoom-in or zoom-out input is held for the predefined first time.

2. The method of claim 1, wherein further comprising:
determining whether the detected zoom-in or zoom-out input is held for a predefined second time greater than the predefined first time; and
displaying a third screen at a third zoom level, when the detected zoom-in or zoom-out input is held for the predefined second time.

3. The method of claim 2, wherein the third zoom level is higher than the second zoom level.

4. The method of claim 2, wherein the third zoom level is lower than the second zoom level.

5. The method of claim 1, wherein displaying the second screen comprises displaying a predetermined-sized zoom-in screen.

6. The method of claim 1, wherein displaying the second screen comprises displaying a given-sized zoom-out screen.

7. The method of claim 1, wherein displaying the second screen comprises displaying a zoom toolbar for adjusting a zoom level.

8. A touch-sensitive device having an adjustable zoom level adjustment, the device comprising:
a display panel configured to display a first screen at a first zoom level;
a touch panel configured to detect a zoom-in input or a zoom-out input from at least one point thereof; and
a control unit configured to determine whether the detected zoom-in or zoom-out input is held for a predefined first time, and to control the display panel to display a second screen at a second zoom level, when the detected zoom-in or zoom-out input is held for the predefined first time.

9. The device of claim 8, wherein the control unit is further configured to control the display panel to display a third screen at a third zoom level, when the detected zoom-in or zoom-out input is held for a predefined second time that is greater than the predefined first time.

10. The device of claim 9, wherein the third zoom level is higher than the second zoom level.

11. The device of claim 9, wherein the third zoom level is lower than the second zoom level.

12. The device of claim 8, wherein the control unit is further configured to control the display panel to display the second screen as a predetermined-sized zoom-in screen.

13. The device of claim 8, wherein the control unit is further configured to control the display panel to display the second screen as a predetermined-sized zoom-out screen.

14. The device of claim 8, wherein the control unit is further configured to control the display panel to display a zoom toolbar for adjusting the zoom level.
